(19) Europäisches Patentamt / European Patent Office / Office européen des brevets

(11) **EP 4 730 248 A1**

(12) # DEMANDE DE BREVET EUROPEEN

(43) Date de publication:
**22.04.2026 Bulletin 2026/17**

(21) Numéro de dépôt: **25208573.3**

(22) Date de dépôt: **14.10.2025**

(51) Classification Internationale des Brevets (IPC):
**G06Q 30/0251** (2023.01)   **G06Q 30/0272** (2023.01)

(52) Classification Coopérative des Brevets (CPC):
**G06Q 30/0264; G06Q 30/0272**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **17.10.2024 FR 2411261**

(71) Demandeur: **JCDecaux SE**
**92200 Neuilly-Sur-Seine (FR)**

(72) Inventeur: **LI, Simon**
**95800 CERGY (FR)**

(74) Mandataire: **Plasseraud IP**
**104 Rue de Richelieu**
**CS92104**
**75080 Paris Cedex 02 (FR)**

(54) **PROCÉDÉ, SERVEUR ET SYSTÈME D'AFFICHAGE DIGITAL, ÉCONOME EN BANDE PASSANTE**

(57)   Procédé mise en œuvre par au moins un serveur (7) de commande d'affichage de contenus numériques par des dispositifs d'affichage digital (2), comprenant : a) générer des listes de lecture, chaque liste de lecture étant destinée à être lue par un ou plusieurs desdits dispositifs d'affichage digital (2), générer une liste de lecture en fonction d'une campagne d'affichage comprenant : a2) calculer un nombre d'occurrences minimal de jeu de chaque contenu permettant de respecter la fraction de temps de lecture total allouée à chaque contenu ; a3) réduire le nombre d'occurrences d'au moins un contenu ; a4) insérer dans la liste des identifiants de contenus numériques à lire ; e) transmettre au moins une desdits listes de lecture à un ou plusieurs desdits dispositifs d'affichage (2) digital auxquels l'au moins une desdits listes de lecture est destinée.

[Fig. 1]

FIG. 1

EP 4 730 248 A1

## Description

### Domaine technique

La présente description est relative aux procédés, serveurs et systèmes d'affichage digital, aux dispositifs d'affichage digital et aux serveurs d'affichage digital. Plus spécifiquement, la présente description est relative à l'optimisation de la bande passante dans le cadre de tels procédé, serveurs et systèmes.

### Technique antérieure

On connaît des procédés, serveurs et systèmes d'affichage digital permettant le déploiement de listes de lecture et de contenus vers des dispositifs d'affichages digitaux.

Par exemple, au sein d'un système d'affichage digital, un serveur peut transmettre des informations à des dispositifs d'affichage indiquant d'afficher un contenu défini. Un tel système permet au serveur de contrôler le contenu joué par les dispositifs, par exemple pour correspondre à des campagnes d'affichage mises à jour en temps réel.

Par exemple, le serveur peut transmettre aux dispositifs d'affichage les contenus à jouer. Alternativement, le serveur peut transmettre aux dispositifs d'affichage digital une ou plusieurs listes de lecture contenant des identifiants de contenus à jouer.

Les données échangées entre le serveur et les dispositifs d'affichage peuvent cependant être volumineuses, ce qui induit des coûts importants en termes de bande passante, notamment lorsque le contenu à jouer est susceptible d'être fréquemment modifié par le serveur.

L'un des objectifs de la présente description est donc de limiter la quantité de données échangées entre un serveur et des dispositifs d'affichage, dans le cadre d'un système d'affichage dans lequel le serveur indique aux dispositifs le contenu à jouer.

### Résumé

La présente description a notamment pour but d'améliorer l'efficacité de ces procédés.

A cet effet, il est proposé un procédé mis en œuvre par au moins un serveur de commande d'affichage de contenus numériques par des dispositifs d'affichage digital (2), comprenant : a) générer des listes de lecture en fonction de campagnes d'affichage, chaque liste de lecture étant destinée à être lue par un ou plusieurs desdits dispositifs d'affichage digital, chaque liste de lecture comprenant au moins une série d'identifiants de contenus numériques à lire mais ne comprenant pas d'adresses de chargement des contenus numériques ni d'empreintes numériques des contenus numériques, générer une liste de lecture en fonction d'une campagne d'affichage comprenant : a1) recevoir un ensemble d'identifiants de contenus numériques à lire, chaque identifiant étant associé à une durée de contenu et une fraction de temps de lecture total allouée audit contenu dans la campagne d'affichage ; a2) calculer un nombre d'occurrences minimal de jeu de chaque contenu permettant de respecter la fraction de temps de lecture total allouée à chaque contenu dans la liste de lecture ; a4) insérer dans la liste des identifiants de contenus numériques à lire; e) transmettre au moins une desdits listes de lecture à un ou plusieurs desdits dispositifs d'affichage digital (2) auxquels l'au moins une desdits listes de lecture est destinée.

Grâce à ces dispositions, l'utilisation de bande passante pour la communication entre le serveur et les dispositifs pour transmettre les listes de lectures est réduite. En effet, les identifiants de contenu sont des données plus légères que les contenus eux-mêmes, ou même des empreintes de contenus. De plus, le nombre d'occurrences d'identifiants de contenus est réduit, la taille de la liste, et donc le nombre d'occurrences d'identifiants à insérer dans la liste, est réduit. Les étapes du procédé permettent donc de réduire les quantités de données à transmettre entre le serveur et les dispositifs, et donc en réduisant les besoins de bande passante entre le serveur et les dispositifs, tout en prenant en compte les fractions de temps total allouées à chaque contenu dans la campagne.

Selon un autre aspect, il est proposé un serveur d'affichage digital adapté pour commander des dispositifs d'affichage digital, ledit serveur étant adapté mettre en œuvre de tout ou partie d'un procédé tel que défini dans les présentes.

Selon un autre aspect, il est proposé un programme informatique comportant des instructions pour la mise en œuvre de tout ou partie d'un procédé tel que défini dans les présentes lorsque ce programme est exécuté par un processeur.

Selon un autre aspect, il est proposé un support d'enregistrement non transitoire, lisible par un ordinateur, sur lequel est enregistré un tel programme.

Les caractéristiques exposées dans les paragraphes suivants peuvent, optionnellement, être mises en œuvre, indépendamment les unes des autres ou en combinaison les unes avec les autres :

Dans un mode de réalisation, le procédé comprend a3) réduire le nombre d'occurrences d'au moins un contenu ;

chaque identifiant d'un contenu numérique est inséré selon le nombre réduit d'occurrences dudit contenu.

Ceci permet de réduire encore le nombre d'occurrences, et donc la taille de la liste, tout en conservant une approximation raisonnable des fractions de temps de lecture total allouées respectivement à chaque contenu.

Dans un mode de réalisation, le procédé comprend a5) vérifier si la liste de lecture respecte au moins un critère choisi dans une liste comprenant un critère de durée de la liste de lecture et un critère de taille de la liste de lecture, et : si la liste de lecture respecte ledit au moins un critère, chaque identifiant d'un contenu numérique est inséré dans la liste selon le nombre d'occurrences minimal de jeu de chaque contenu permettant de respecter la fraction de temps de lecture total allouée à chaque contenu ; sinon : le procédé comprend a3) réduire le nombre d'occurrences d'au moins un contenu ; chaque identifiant d'un contenu numérique est inséré dans la liste selon le nombre réduit d'occurrences dudit contenu.

Ceci permet d'envoyer une liste respectant strictement les temps de temps de lecture total allouées respectivement à chaque contenu si elle est considérée comme suffisamment légère, et sinon une liste de taille réduite mais fournissant une approximation acceptable des fractions de temps de lecture total allouées à chaque contenu.

Dans un mode de réalisation, les identifiants de contenus sont répartis par programmes, et : chaque identifiant de contenu est associé à une fraction de temps de lecture allouée au contenu au sein du programme ; chaque programme est associé à une fraction de temps de lecture total allouée au programme.

Ces caractéristiques permettent de définir de manière flexible la fraction de temps alloués à chaque contenu, à la fois au sein d'un programme donné et globalement, en fonction de la fraction de temps total allouée à chaque programme.

Dans un mode de réalisation, calculer un nombre d'occurrences minimal de jeu de chaque contenu permettant de respecter la fraction de temps de lecture total allouée à chaque contenu dans la liste de lecture comprend pour chaque programme : a21) déterminer un numérateur de référence du programme comme le petit commun multiple des numérateurs des fractions de temps de lecture allouées aux contenus au sein du programme ; a22) exprimer les fractions de temps de lecture allouées aux contenus au sein du programme de manière à ce que le numérateur de chaque fraction de temps de lecture allouée à un contenu au sein du programme soit égal audit numérateur de référence du programme ; a23) calculer une durée minimale du programme permettant de respecter la fraction de temps de lecture total allouée à chaque contenu au sein du programme comme : le plus petit commun multiple des dénominateurs des fractions de temps de lecture allouées aux contenus au sein du programme multipliés par les durées des contenus ; divisé par le numérateur de référence du programme ; a24) calculer un nombre d'occurrences minimal de jeu de chaque contenu du programme permettant de respecter la fraction de temps de lecture allouée au contenu au sein du programme comme : la durée minimale du programme permettant de respecter la fraction de temps de lecture total allouée à chaque contenu au sein du programme multipliée par le numérateur de référence du programme ; divisée par le dénominateur de la fraction de temps de lecture allouée au contenu au sein du programme multiplié par la durée du contenu.

Ces caractéristiques permettent de définir le temps de lecture minimal, et le nombre d'occurrences minimal de lecture de chaque contenu permettant de respecter la fraction de temps de lecture total allouée à chaque contenu au sein de chaque programme.

Dans un mode de réalisation, calculer un nombre d'occurrences minimal de jeu de chaque contenu permettant de respecter la fraction de temps de lecture total allouée à chaque contenu dans la liste de lecture comprend ensuite: a25) définir un coefficient multiplicateur de durée totale comme le petit commun multiple des numérateurs des fractions de temps de lecture allouées aux programmes ; a26) exprimer les fractions de temps de lecture allouées aux programmes de manière à ce que le numérateur de chaque fraction de temps de lecture total allouée au programme soit égal audit coefficient multiplicateur de durée totale ; a27) calculer une durée minimale de lecture totale de la liste de lecture permettant de respecter la fraction de temps de lecture total allouée à chaque programme comme : le plus petit commun multiple des dénominateurs des fractions de temps de lecture total allouées aux programmes multipliés par les durées minimales des programmes permettant de respecter la fraction de temps de lecture total allouée à chaque contenu au sein des programmes; divisé par le coefficient multiplicateur de durée totale ; a28) calculer un nombre d'occurrences minimal de jeu de chaque programme permettant de respecter fraction de temps de lecture allouée au programme comme : la durée minimale de lecture totale de la liste de lecture permettant de respecter la fraction de temps de lecture total allouée à chaque contenu multipliée par le coefficient multiplicateur de durée totale ; divisée par le dénominateur de la fraction de temps de lecture total allouée au programme multiplié par la durée minimale du programme permettant de respecter la fraction de temps de lecture total allouée à chaque contenu au sein du programme.

Ces caractéristiques permettent de définir le temps de lecture optimal, c'est-à-dire un temps de lecture minimal de l'ensemble des contenus permettant de respecter la fraction de temps de lecture total allouée à chaque contenu au sein de chaque programme, et le nombre d'occurrences minimal de lecture de chaque programme permettant de respecter la fraction de temps de lecture total allouée à chaque contenu.

Dans un mode de réalisation, a3) réduire le nombre d'occurrences d'au moins un contenu comprend diviser le nombre total d'occurrences de chaque contenu par un même diviseur, en approximant les nombres totaux d'occurrences de contenus qui ne sont pas divisibles par le diviseur.

Ceci permet de réduire le nombre total d'occurrences, et la durée de la liste de lecture, tout conservant une bonne approximation des fractions des temps de lecture allouées à chaque contenu.

Dans un mode de réalisation, l'étape de réduire le nombre d'occurrences d'au moins un contenu n'est mise en œuvre que si un ensemble de conditions est respecté, ledit ensemble de conditions comprenant au moins une parmi des conditions suivantes : la somme des nombres d'occurrences minimales de chaque contenu permettant de respecter la fraction de temps de lecture total allouée à chaque contenu est supérieur à un seuil de nombre d'occurrences ; la durée minimale de la liste permettant de respecter la fraction de temps de lecture total allouée à chaque contenu est supérieure à un seuil de durée

Ces caractéristiques permettent d'utiliser un pattern dit optimal dans lequel les nombres d'occurrences des contenus permettent de respecter strictement la fraction de temps de lecture total allouée à chaque contenu dans le cas où la liste est suffisamment légère et/ou courte (c'est-à-dire dans des cas où la liste de lecture est déjà considérée comme suffisamment légère sans approximer les fractions de temps de lecture), et de réduire le nombre d'occurrences d'identifiants de contenus dans a liste dans le cas contraire.

Dans un mode de réalisation, a3) réduire le nombre d'occurrences d'au moins un contenu comprend : supprimer au moins un des programmes afin de respecter ledit ensemble de conditions ; calculer un nombre d'occurrences minimal de jeu de chaque contenu permettant de respecter la fraction de temps de lecture total allouée à chaque contenu sans tenir compte de l'au moins un des programmes supprimé ; déterminer un diviseur de la durée de la liste de lecture ainsi obtenu ; remplacer ledit au moins un des programmes supprimé par une approximation de la division des nombres totaux d'occurrences des contenus du programme par le diviseur.

Ces caractéristiques permettent de diviser la taille et la durée de la liste par un diviseur donné en obtenant une approximation aussi exacte que possible, puisque la division du nombre d'occurrences est exacte pour au moins un programme.

Dans un mode de réalisation, a3) réduire le nombre d'occurrences d'au moins un contenu comprend incrémenter ou décrémenter itérativement les nombres totaux des contenus du contenu du plus long au moins long afin de réduire un reste d'une division euclidienne des nombres totaux des contenus par un diviseur.

Ces caractéristiques permettent de diviser les nombres d'occurrences par un diviseur donné même si certains des nombres d'occurrences ne sont pas divisibles par le diviseur, tout en conservant une bonne approximation des temps de lecture relatifs des contenus.

## Brève description des dessins

D'autres caractéristiques, détails et avantages apparaîtront à la lecture de la description détaillée ci-après, et à l'analyse des dessins annexés, sur lesquels :

Fig. 1

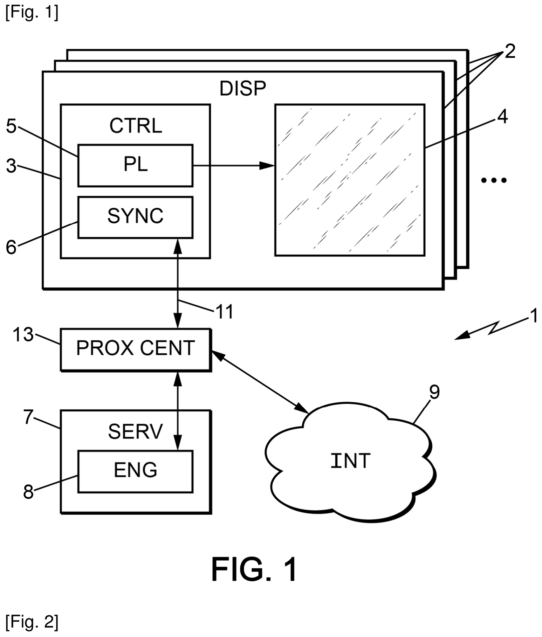

[Fig. 1] la figure 1 est une vue schématique montrant un système d'affichage digital selon une forme de réalisation.

Fig. 2

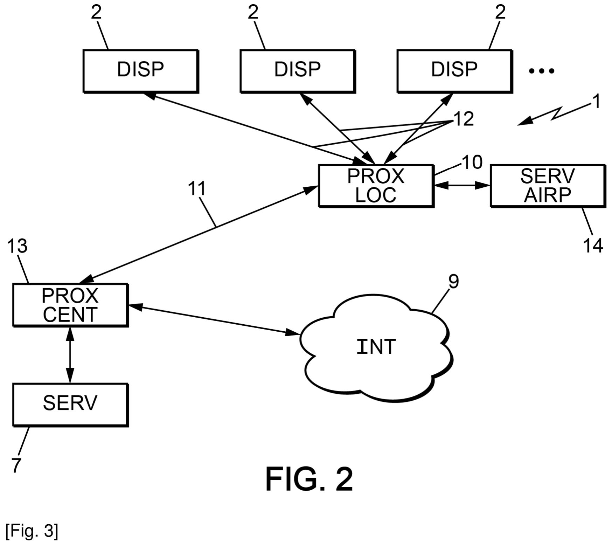

[Fig. 2] la figure 2 est une vue schématique montrant un système d'affichage digital selon une autre forme de réalisation.

Fig. 3

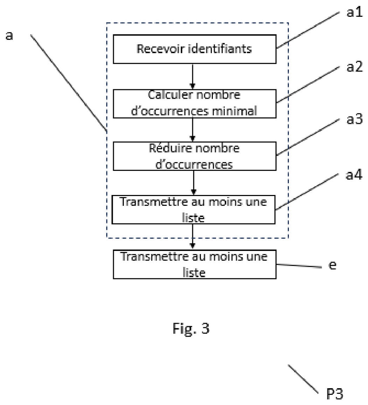

[Fig. 3] la figure 3 représente un procédé P3 mise en œuvre par au moins un serveur selon un mode de réalisation.

## Description plus détaillée

Sur les différentes figures, les mêmes références désignent des éléments identiques ou similaires.

La figure 1 montre un système d'affichage digital 1 comportant au moins un serveur 7 (SERV) et des dispositifs d'affichage digital 2 (DISP). La description qui suit fait référence à un serveur 7 pour la clarté de l'exposé, mais les fonctions du serveur 7 décrites ci-dessous pourraient être réparties sur plusieurs serveurs 7.

Chaque dispositif d'affichage 2 comporte un dispositif de commande 3 (CTRL) tel qu'un micro-ordinateur ou similaire, qui commande un écran digital 4.

Le dispositif de commande 3 exécute un lecteur 5 (PL) de contenus numériques (module logiciel exécuté par le dispositif de commande 3) et exécute également un module (logiciel) de synchronisation 6 (SYNC).

Le serveur 7 exécute notamment un moteur 8 (ENG) de génération de listes de contenus et de manifestes de chargement.

Le module de synchronisation 6 de chaque dispositif d'affichage numérique 2 communique avec le serveur 7 et le cas échéant avec d'autres ressources éventuellement sur Internet 9 (INT). Dans le mode de réalisation représenté, les dispositifs d'affichage numérique 2 communiquent avec le ou les serveur(s) 7 et avec lesdites autres ressources par l'intermédiaire d'un serveur proxy central 13 (PROX CENT) ou serveur mandataire central.

Cette communication peut se faire par tout réseau étendu (WAN - liaisons 11 sur la figure 1). Par exemple, dans de nombreux cas cette communication est faite par un réseau de téléphonie mobile (réseau cellulaire large bande, par exemple de type 3G, 4G ou 5G). Bien entendu, tout autre mode de communication est possible.

Le moteur 8 du serveur 7 est adapté pour générer de façon répétitive et / ou en fonction de certains faits générateurs (modification de programmation, de contenus, etc.) des listes de lecture (a) en fonction de campagnes d'affichage. Cette génération de listes de lecture est effectuée en fonction des réservations faites par les annonceurs concernant les différents dispositifs d'affichage 2, en fonction des contenus numériques à jouer pour ces campagnes d'affichage et en fonction des dispositifs d'affichage digital disponibles.

Chaque liste de lecture étant destinée à être lue par un ou plusieurs desdits dispositifs d'affichage digital.

Chaque liste de lecture comprend au moins une série d'identifiants de contenus numériques à lire séquentiellement, sur une ou plusieurs périodes de temps prédéterminées.

La liste de lecture ne comprend pas d'adresses de chargement des contenus numériques ni d'empreintes numériques des contenus numérique ; c'est donc un document représentant un faible volume de données, puisque les identifiants de chaque contenu numérique présentent un volume de données moins élevé que le contenu lui-même..

Le moteur 8 du serveur 7 peut en en outre être adapté pour générer de façon répétitive et / ou en fonction de certains faits générateurs (modification de programmation, de contenus, etc.), pour chaque dispositif d'affichage digital, un manifeste de chargement (b) comprenant au moins des adresses de chargement des contenus numériques référencés dans la liste de chargement. Chaque manifeste de chargement peut en outre comprendre, pour chaque contenu numérique, l'identifiant compris dans la liste de lecture.

Chaque manifeste de chargement peut comprendre en outre au moins une empreinte numérique de référence pour chaque contenu numérique référencé dans ledit manifeste de chargement. Une "empreinte numérique" désigne une donnée, généralement de taille fixe et généralement significativement inférieure à la taille des contenus numériques, obtenue à partir d'un contenu numérique (fichier, document, etc.) par l'application d'une fonction de hachage ou d'un algorithme cryptographique. Cette empreinte permet d'identifier de manière unique le contenu d'un fichier ou d'un document, même si ce dernier est volumineux, et de vérifier son intégrité. Toute modification, même minime, du contenu d'origine entraîne un changement significatif de l'empreinte numérique. Une empreinte numérique peut par exemple être une somme de contrôle (« checksum »), une signature numérique ou une empreinte de certificat. Selon un exemple, l'empreinte numérique peut être une somme de contrôle (« checksum »), par exemple de type « MD5 ». Selon un autre exemple, l'empreinte numérique peut être une signature numérique de type « GPG ». Selon un troisième exemple, le manifeste de chargement peut comprendre en outre deux empreintes numériques de référence pour chaque contenu numérique, notamment une somme de contrôle par exemple de type « MD5 » et une signature numérique plus complexe, par exemple de type « GPG ».

La fréquence de génération des listes de lecture et manifestes de chargement par le moteur 8 peut être variable selon la vitesse d'arrivée de nouvelles réservations ou de modifications de réservations par les annonceurs. Cette fréquence peut aller jusqu'à une fois toutes les quelques minutes, voire des fréquences plus élevées, sachant qu'une partie des réservations peuvent se faire par enchères automatiques en ligne. Comme expliqué précédemment, certaines mises à jour de listes de lecture se font sans changement de manifeste de chargement lorsque les modifications portent par exemple sur l'ordre ou la fréquence de lecture des contenus numériques, ou encore sur des conditions de lecture des contenue numériques.

Les modules de synchronisation 6 des dispositifs d'affichage digital 2 peuvent être adaptés pour mettre à jour leurs listes de lecture et manifestes de chargement (c), à partir du moteur 8 du serveur 7.

Cette mise à jour peut comprendre les étapes suivantes :

c1) Le module de synchronisation 6 du dispositif d'affichage 2 interroge le moteur 8 du serveur 7 par envoi d'une requête à intervalles prédéterminés, pour déterminer si le serveur 7 a une nouvelle liste de lecture et / ou un nouveau manifeste de chargement correspondant au dispositif d'affichage digital 2. La fréquence d'interrogation du moteur 8 peut être fixe (par exemple toutes les quelques minutes) ou déterminée par une liste de lecture et / ou un manifeste de chargement précédemment téléchargés du moteur 8. Par exemple, la fréquence d'interrogation du moteur 8 pour les listes de lecture peut être fixe (par exemple toutes les quelques minutes, notamment toutes les 5 minutes) et la fréquence d'interrogation du moteur 8 pour les manifestes de chargement peut être incluse dans les listes de lecture. Les listes de lecture et manifestes de chargement peuvent être horodatés et pour déterminer si le serveur 7 a une nouvelle liste de lecture correspondant au dispositif d'affichage digital 2, le module de synchronisation 6 peut envoyer une requête au moteur 8 pour recevoir l'horodatage de la liste de lecture en vigueur pour le dispositif d'affichage digital 2. Si cet horodatage est plus récent que l'horodatage de la dernière liste de lecture téléchargée par le dispositif d'affichage digital 2, alors il est déterminé que le moteur 8 du serveur 7 a une nouvelle liste de lecture correspondant au dispositif d'affichage digital 2. On procède de même pour les manifestes de chargement.

c2) S'il est déterminé que le moteur 8 a une nouvelle liste de lecture correspondant au dispositif d'affichage digital 2 et / ou un nouveau manifeste de chargement, le module de synchronisation charge la nouvelle liste de lecture et / ou le nouveau manifeste de chargement depuis le moteur 8 du serveur 7 (par envoi d'une requête demandant à recevoir la nouvelle liste de lecture et / ou le nouveau manifeste de chargement).

c3) Si un nouveau manifeste de chargement a été chargé depuis le serveur 7, le module de synchronisation 6 déterminer du dispositif d'affichage digital 2 détermine quels sont le ou les nouveaux contenus numériques référencés dans le nouveau manifeste de chargement. Cette détermination peut être faite par exemple en comparant les empreintes numériques des contenus numériques référencés dans le nouveau manifeste de chargement avec les empreintes numériques des contenus numériques déjà présents en mémoire du dispositif d'affichage digital 2.

c4) Le module de synchronisation 6 du dispositif d'affichage digital 2 télécharge alors ledit ou lesdits nouveaux contenus numériques depuis la ou les adresses URL correspondant à chaque contenu numérique indiquées dans le nouveau manifeste de chargement. D'une façon générale, ce téléchargement se fait par internet 9. Les adresses URL en question peuvent correspondre au serveur 7, à un autre serveur propre à l'exploitant du serveur 7 ou à un autre emplacement sur internet.

Le lecteur 5 de chaque dispositif d'affichage digital 2 est adapté pour lire les contenus numériques correspondant à sa liste de lecture en vigueur (dernière liste de lecture chargée par le module de synchronisation 6) et pour afficher ces contenus numériques sur l'écran digital 4 du dispositif d'affichage digital 2.

Aux étapes (c1) et (c2), le module de synchronisation 6 de chaque dispositif d'affichage digital 2 envoie ses requêtes toujours à une même adresse URL qui est propre au dispositif d'affichage digital 2.

Aux étapes (c1) et (c2), le module de synchronisation 6 et le moteur 8 du serveur 7 peuvent avantageusement communiquer de façon cryptée, par exemple en utilisant le protocole « https ».

A l'étape (c4), le module de synchronisation 6 du dispositif d'affichage digital 2 détermine une empreinte numérique calculée du nouveau contenu numérique téléchargé, vérifie si l'empreinte numérique calculée correspond à l'empreinte numérique de référence contenue dans le manifeste de chargement et valide le contenu numérique téléchargé uniquement si l'empreinte numérique calculée correspond à l'empreinte numérique de référence. Si le contenu numérique téléchargé n'est pas validé, il est détruit. Si le manifeste de téléchargement contient deux empreintes numériques (ou plus) pour au moins certains contenus numériques, cette validation peut être effectuée pour les différentes empreintes numériques du contenu numérique, séquentiellement ou en parallèle.

A l'étape (c4), le module de synchronisation 6 du dispositif d'affichage digital 2 peut télécharger les nouveaux contenus numériques de façon non cryptée, par exemple en utilisant le protocole « http ».

A l'étape (c4), le module de synchronisation 6 du dispositif d'affichage digital 2 peut, dans un mode de réalisation, télécharger les nouveaux contenus numériques par morceaux.

Le mode de réalisation représenté en figure 1 est fourni à titre d'exemple non-limitatif uniquement.

Par exemple, dans l'exemple représenté en figure 1, les dispositifs d'affichage interrogent régulièrement le serveur pour déterminer l'existence d'une nouvelle liste. Au contraire, le serveur peut envoyer directement les listes dès qu'elles sont disponibles. Dans tous les cas, le serveur constitue génère des listes de lectures et les transmet aux dispositifs d'affichage, que ce soit à la demande des dispositifs ou à son initiative.

De même, l'invention n'est pas restreinte à des modes de réalisation dans lesquelles un fichier manifeste est établi. Par exemple, les identifiants de contenus peuvent faire référence à des identifiants de contenus définis dans une bibliothèque accessible aux dispositifs d'affichage, sans nécessiter l'utilisation de fichiers manifeste.

Le mode de réalisation représenté sur la figure 2 est similaire à celui de la figure 1 et ne sera donc pas décrit à nouveau en détail. Ce mode de réalisation de la figure 2 se distingue de celui de la figure 1 par le fait que plusieurs des dispositifs d'affichage digital 2 appartiennent à un réseau local (liaison 12) comprenant également un serveur proxy 10 de contenus (PROX LOC) ou serveur mandataire de contenus, et le module de synchronisation de chaque dispositif d'affichage digital 2 du réseau local est adapté pour télécharger les nouveaux contenus numériques à travers ledit serveur proxy 10. Le serveur proxy 10 ne charge ainsi qu'une seule fois chaque nouveau contenu par la liaison 11 qui peut éventuellement être de relativement faible débit ou de relativement faible qualité, puis distribue ce contenu aux différents dispositifs d'affichage digital 2 du réseau local, par les liaisons 12 de plus haut débit et / ou de meilleure qualité du réseau local. Le serveur proxy 10 peut éventuellement communiquer en outre avec un serveur local 14 (SERV AIRP), par exemple propre à un aéroport.

Il est maintenant fait référence à la figure 3.

La figure 3 représente un procédé P3 mise en œuvre par au moins un serveur tel que le serveur 7.

Le procédé P3 a pour objectif de générer des listes de lectures qui pourront être transmises aux dispositifs d'affichage, tout en limitant la consommation de bande passante impliquée par la transmission des listes.

Le procédé P3 comprend une première étape a de consistant à générer des listes de lecture en fonction de campagnes d'affichage, chaque liste de lecture étant destinée à être lue par un ou plusieurs desdits dispositifs d'affichage digital, chaque liste de lecture comprenant au moins une série d'identifiants de contenus numériques à lire mais ne comprenant pas d'adresses de chargement des contenus numériques ni d'empreintes numériques des contenus numérique.

Le procédé P3 comprend ensuite une deuxième étape de au moins une desdits listes de lecture à un ou plusieurs desdits dispositifs d'affichage digital (2) auxquels l'au moins une desdits listes de lecture est destinée.

Comme indiqué ci-dessus, les listes peuvent être générées selon différents faits générateurs tels que par exemple la modification d'une programmation ou la survenue d'une nouvelle campagne d'affichage, et la transmission des listes de lecture aux dispositifs peut se faire soit à l'initiative du serveur, soit à l'initiative des dispositifs.

En pratique, une liste de lecture générée se présente comme une liste d'identifiants de contenus numériques. Les contenus correspondant aux identifiants peuvent ainsi être lus, dans l'ordre de la liste, par les dispositifs d'affichage digital 2. Les dispositifs d'affichage digital peuvent redémarrer la lecture de la liste depuis le début lorsque tous les contenus de la liste ont été lus. Un même identifiant peut être présent à plusieurs reprises dans la liste, si le contenu doit être lu plusieurs fois.

Une liste de lecture peut notamment être générée en fonction d'une campagne d'affichage donnée. Une campagne d'affichage correspond à un affichage désiré d'un ensemble de contenus sur un ou plusieurs dispositifs d'affichage. Une campagne peut par exemple être une campagne publicitaire au cours de laquelle des publicités sont affichées sur les dispositifs d'affichage, ou encore une campagne de prévention au cours de laquelle des contenus de prévention sont affichés sur les dispositifs.

Une campagne définit ainsi des contenus à afficher, mais également une fraction de temps de lecture total alloué à chaque contenu. Par exemple, une campagne peut consister en l'affichage de trois contenus $c_1$, $c_2$ et $c_3$, avec des fractions de temps de lecture total de respectivement 1/10, 2/10 et 7/10.

La liste de lecture doit ainsi être définie, de manière à ce que les temps de lecture effectif de chaque contenu correspondent, ou s'approchent, des fractions de temps de lecture total telles que définies pour la campagne.

Cependant, un respect strict des fractions de temps de lecture peut impliquer un nombre d'occurrence élevé de chaque identifiant au sein de la liste, ce qui augmente la quantité de données à transmettre.

Un objectif de l'invention est donc de limiter la quantité de données à transmettre du serveur aux dispositifs d'affichage, soit en fournissant une liste de calcul de taille minimale correspondant aux fractions exactes de temps de calcul, soit en fournissant une approximation acceptable des temps de lecture total définis pour la campagne. A cet effet, l'étape a) de générer la liste comprend 4 plusieurs sous-étapes a1), a2 et a4), ainsi que de manière optionnelle les étapes a5 et a3 décrites ci-après.

Dans une première sous-étape a1), un ensemble d'identifiants de contenus numériques à lire est reçu. Chaque identifiant est associé à une durée de contenu, correspondant à la durée du contenu visé par l'identifiant.

Chaque identifiant est de plus associé à une fraction de temps de lecture total allouée audit contenu dans la campagne d'affichage. Cette fraction correspond à la part du temps de lecture total qui doit être allouée au contenu visé par l'échantillon. Une fraction de temps de lecture pourra également être appelée « Share Of Time », abrévié « SOT ».

La fraction de temps allouée à un contenu peut être définie de plusieurs manières. Par exemple, une fraction du temps de lecture total peut être allouée directement à chaque contenu.

Alternativement, les identifiants de contenus peuvent être répartis dans différents programmes (ou campagnes), et :

- Chaque identifiant d'un contenu dans un programme peut être associé à une fraction de temps de lecture du contenu au sein du programme. ;

- chaque programme est associé à une fraction de temps de lecture total des programmes.

Dans la suite de la demande, nous utiliserons, à titre d'exemple non limitatif, les nomenclatures définies ci-dessous :

- l'ensemble des campagnes (ou programmes) relatives à une liste de lecture sera noté S ;

- les campagnes (ou programmes) relatives à une liste de lecture sont répertoriées selon un indice i et notées $s_1$, $s_2$ ... $s_i$ $\in$ S;

- la durée de lecture du programme $s_i$ sera noté $d_{s_i}$, et pourra par exemple être exprimé en secondes, avec $d_{s_i} \in N^+$ (nombre entier strictement positif) ;

- la fraction de durée de lecture allouée au programme $s_i$ sera noté $SOT_{s_i}$, avec $SOT_{s_i} \in R^{+*}$ (nombre relatif strictement positif) ;

- l'ensemble des contenus relatifs à une liste de lecture sera noté C, étant entendu que chaque contenu peut être associé à un programme donné ;

- les contenus relatifs à une liste de lecture sont répertoriés selon deux indices i et j, le contenu $c_{i,j}$ étant le contenu j du programme i;

- le nombre d'occurrences du contenu $c_{i,j}$ dans la liste de lecture sera noté $\lambda_{ci,j}$ ;

- le fraction de temps de lecture du contenu $c_{i,j}$ au sein du programme $s_i$ dans la liste de lecture sera noté $W_{ci,j}$, avec $W_{ci,j} \in [0; 1]$. Cette fraction de temps de lecture sera exprimée sous la forme d'une division d'un numérateur $a_{ci,j}$ par un dénominateur $b_{ci,j}$ ,soit $W_{c_{i,j}} = \frac{a_{c_{i,j}}}{b_{c_{i,j}}}$ ;

- la durée du contenu j du programme i sera noté $d_{ci,j}$.

Le procédé P3 sera ainsi illustré par un exemple dans lequel 3 programmes $s_1$, $s_2$ et $s_3$ sont définis, chacun des programmes comprenant trois contenus, définis respectivement par les identifiants $c_{1,1}$, $c_{1,2}$ et $c_{1,3}$ pour les contenus du programme $s_1$, $c_{2,1}$, $c_{2,2}$ et $c_{2,3}$ pour les contenus du programme $s_2$ et $c_{3,1}$, $c_{3,2}$ et $c_{3,3}$ pour les contenus du programme $s_3$.

Les contenus peuvent être strictement différents entre les programmes, ou des redondances peuvent exister. Par exemple, les contenus $c_{1,1}$, $c_{1,2}$, $c_{1,3}$, $c_{2,1}$, $c_{2,2}$ et $c_{2,3}$, $c_{3,1}$, $c_{3,2}$ et $c_{3,3}$ peuvent être 9 contenus strictement différents les uns des autres, ou certains contenus peuvent être identiques entre les programmes. Par exemples, les contenus $c_{1,1}$ et $c_{2,3}$ peuvent être les mêmes. Différentes paires ou plus généralement de contenus identiques peuvent être identifiés entre les programmes.

Les fractions de temps alloués aux différents programmes et contenus sont résumés dans les tableaux ci-dessous. Dans les exemples ci-dessous, les durées des contenus sont exprimées en secondes.

Le programme $s_1$ de l'exemple est associé à une fraction de temps de lecture total $SOT_1$ = 2/3, et les durées et fraction de temps de lecture total des contenus au sein du programme de chaque contenu sont listées dans le tableau ci-dessous.

[Tableau 1]

| Identifiant de contenu | Durée | Fraction de temps de lecture au sein du programme $s_1$ |
|---|---|---|
| $c_{1,1}$ | 6 | 2/3 |
| $c_{1,2}$ | 10 | 1/6 |
| $c_{1,3}$ | 15 | 1/6 |

Le programme $s_2$ de l'exemple est associé à une fraction de temps de lecture total $SOT_2$ = 1/4, et les durées et fraction de temps de lecture total des contenus au sein du programme de chaque contenu sont listées dans le tableau ci-dessous.

[Tableau 2]

| Identifiant de contenu | Durée | Fraction de temps de lecture au sein du programme $s_2$ |
|---|---|---|
| $c_{2,1}$ | 8 | 1/3 |
| $c_{2,2}$ | 10 | 1/3 |
| $c_{2,3}$ | 20 | 1/3 |

Le programme $s_3$ de l'exemple est associé à une fraction de temps de lecture total $SOT_3$ = 1/12, et les durées et fraction de temps de lecture total des contenus au sein du programme de chaque contenu sont listées dans le tableau ci-dessous.

[Tableau 3]

| Identifiant de contenu | Durée | Fraction de temps de lecture au sein du programme $s_3$ |
|---|---|---|
| $c_{3,1}$ | 30 | 1/2 |
| $c_{3,2}$ | 15 | 1/4 |

(suite)

| Identifiant de contenu | Durée | Fraction de temps de lecture au sein du programme $s_3$ |
|---|---|---|
| $c_{3,3}$ | 12 | 1/4 |

Dans cet exemple, on peut donc par exemple noter que :

- les contenus des programmes $s_1$, $s_2$ et $s_3$ seront joués respectivement 2/3, ¼ et 1/12 du temps total de lecture ;

- les contenus $c_{1,1}$, $c_{1,2}$ et $c_{1,3}$ seront joués respectivement 2/3, 1/6 et 1/6 du temps de lecture du programme $s_1$;

- les contenus $c_{2,1}$, $c_{2,2}$ et $c_{2,3}$ seront joués respectivement 2/3, 1/6 et 1/6 du temps de lecture du programme $s_2$;

- les contenus $c_{3,1}$, $c_{3,2}$ et $c_{3,3}$ seront joués respectivement 2/3, 1/6 et 1/6 du temps de lecture du programme $s_3$;

- on peut en déduire la fraction de temps de lecture total allouée à chaque contenu. Par exemple, la fraction de temps de lecture total allouée au contenu $c_{3,1}$ est ainsi $1/2 * SOT_3 = ½ * 1/12 = 1 / 24$.

Une deuxième sous-étape a2) consiste à calculer un nombre d'occurrences minimal de jeu de chaque contenu permettant de respecter la fraction de temps de lecture total allouée à chaque contenu.
En effet, les combinaisons de fractions de temps de lecture et durées de contenus impliquent que les fractions de temps de lecture total ne peuvent être strictement respectées que pour un nombre minimal donné d'occurrences de lecture.
Ce nombre d'occurrence minimal peut être calculé de différentes manières.
Par exemple, lorsque les contenus sont répartis par programme, on peut en premier lieu obtenir pour chaque programme $s_i$ :

- une durée minimale du programme $d_{si}$ ;

- un multiplicateur de division $a_{w_{c_i}}$ égal au petit commun multiple des numérateurs des fraction de temps de lecture des contenus au sein du programme ;

- un nombre d'occurrences minimum de lecture de chaque contenu au sein de la liste de lecture $\lambda_{ci,j}$ permettant de respecter la fraction de temps de lecture allouée à chaque contenu au sein du programme.

Par exemple, dans le cas du programme $s_1$:

- la durée minimale du programme sera notée $d_{s1}$ ;

- les nombres d'occurrences minimum de lecture des contenus $c_{1,1}$, $c_{1,2}$ et $c_{1,3}$ au sein de la liste de lecture permettant de respecter la fraction de temps de lecture allouée à chaque contenu au sein du programme $s_1$ seront notés respectivement $\lambda_{c1,1}$, $\lambda_{c1,2}$ et $\lambda_{c1,3}$.

Les nombres minimaux d'occurrences permettant de respecter la fraction de temps de lecture de chaque contenu peuvent être calculés pour chaque programme en déterminant dans un premier temps la durée minimale de lecture de chaque programme. Par exemple, les sous-étapes a21 à a24 décrites ci-dessous peuvent être mises en œuvre à cet effet, pour chaque programme.
Reprenant les notations précédemment définies, on peut noter que la durée totale de lecture d'un contenu au sein de la liste de lecture est égale :

- d'une part à la durée du contenu multipliée par le nombre d'occurrence de jeu du contenu , soit $d_{ci,j} * \lambda_{i,j}$ ;

- et d'autre part à la fraction de temps de lecture du contenu au sein du programme multiplié par la durée de lecture du programme, soit $W_{ci,j} * d_{si}$

On peut donc en déduire que pour tout contenu $c_{i,j}$ :

**9**

$$d_{c_{i,j}} * \lambda_{i,j} = W_{c_{i,j}} * d_{s_i} = \frac{a_{c_{i,j}}}{b_{c_{i,j}}} * d_{s_i}$$

Pour reprendre l'exemple des programmes $s_1$, $s_2$, et $s_3$, le respect strict des temps de lecture au sein des programmes implique, compte tenu des durées des programmes et fractions de temps de lecture allouées à chaque programme, que :

$$d_{c_{1,1}} * \lambda_{c_{1,1}} = 6 * \lambda_{c_{1,1}} = \frac{a_{c_{1,1}}}{b_{c_{1,1}}} * d_{s_1} = 2/3 * d_{s_1};$$

$$d_{c_{1,2}} * \lambda_{c_{1,2}} = 10 * \lambda_{c_{1,2}} = \frac{a_{c_{1,2}}}{b_{c_{1,2}}} * d_{s_1} = 1/6 * d_{s_1};$$

$$d_{c_{1,3}} * \lambda_{c_{1,3}} = 15 * \lambda_{c_{1,3}} = \frac{a_{c_{1,3}}}{b_{c_{1,3}}} * d_{s_1} = 1/6 * d_{s_1};$$

$$d_{c_{2,1}} * \lambda_{c_{2,1}} = 6 * \lambda_{c_{2,1}} = \frac{a_{c_{2,1}}}{b_{c_{2,1}}} * d_{s_2} = 1/3 * d_{s_2};$$

$$d_{c_{2,2}} * \lambda_{c_{2,2}} = 10 * \lambda_{c_{2,2}} = \frac{a_{c_{2,2}}}{b_{c_{2,2}}} * d_{s_2} = 1/3 * d_{s_2};$$

$$d_{c_{2,3}} * \lambda_{c_{2,3}} = 15 * \lambda_{c_{2,3}} = \frac{a_{c_{2,3}}}{b_{c_{2,3}}} * d_{s_2} = 1/3 * d_{s_2};$$

$$d_{c_{3,1}} * \lambda_{c_{3,1}} = 6 * \lambda_{c_{3,1}} = \frac{a_{c_{3,1}}}{b_{c_{3,1}}} * d_{s_3} = 1/2 * d_{s_3};$$

$$d_{c_{3,2}} * \lambda_{c_{3,2}} = 10 * \lambda_{c_{3,2}} = \frac{a_{c_{3,2}}}{b_{c_{3,2}}} * d_{s_3} = 1/4 * d_{s_3};$$

$$d_{c_{3,3}} * \lambda_{c_{3,3}} = 15 * \lambda_{c_{3,3}} = \frac{a_{c_{3,3}}}{b_{c_{3,3}}} * d_{s_3} = 1/4 * d_{s_3}.$$

Une première sous-étape a21 consiste à définir un numérateur de référence du programme $a_{w_{c_i}}$ comme le petit commun multiple des numérateurs des fractions de temps de lecture allouées aux contenus au sein du programme.

Dans l'exemple du programme $s_1$, les numérateurs des fractions de temps de lecture des contenus au sein du programme sont respectivement 2, 1 et 1. Leur plus petit commun multiple de l'ensemble des numérateurs, également appelé numérateur de référence du programme et noté $a_{w_{c_1}}$, est donc égal à PPCM(2, 1, 1) = 2. La fonction PPCM() représente le plus petit commun multiple des arguments entre parenthèses. Pour les programmes $s_2$ et $s_3$, les numérateurs sont tous égaux à 1. On a donc $a_{w_{c_2}} = a_{w_{c_3}} = 1$

Une sous-étape a22 peut ensuite consister à exprimer les fractions de temps de lecture allouées aux contenus au sein du programme de manière à ce que le numérateur de chaque fraction de temps de lecture allouée à un contenu au sein du programme soit égal audit numérateur de référence du programme $a_{w_{c_i}}$.

Dans l'exemple du programme $s_1$, avec $a_{w_{c_1}} = 2$, l'étape a22 consiste donc à exprimer les fractions de temps de lecture allouées à chaque contenu de manière à ce que leur numérateur soit égal à 2. Les équations régissant les fractions de temps de lecture sont alors exprimées de la manière suivante à l'issue de l'étape a22:

$$6 * \lambda_{c_{1,1}} = 2/3 * d_{s_1};$$

$$10 * \lambda_{c_{1,2}} = 2/12 * d_{s_1};$$

$$15 * \lambda_{c_{1,3}} = 2/12 * d_{s_1}.$$

Ensuite, une étape a23 consiste à calculer une durée minimale de chaque programme permettant de respecter la fraction de temps de lecture total allouée à chaque contenu au sein du programme comme :

- le plus petit commun multiple des dénominateurs $b_{w_{c_{i,j}}}$ des fractions de temps de lecture allouées aux contenus au sein du programme multipliés par les durées $d_{c_{i,j}}$ des contenus divisé par

- numérateur de référence du programme $a_{w_{c_i}}$ .

En effet, les équations régissant les fractions de temps de lecture peuvent être ré-écrites pour tout i,j comme : $b_{c_{i,j}} * d_{ci,j} * \lambda_{ci,j} = a_{ci,j} * d_{si}$.

Les solutions dans N sont telles que :

[Math. 1]

$$a_{w_{c_i}} * d_{s_i} = PPCM\left(b_{w_{c_{i,1}}} * d_{c_{i,1}}, b_{w_{c_{i,2}}} * d_{c_{i,2}}, \ldots, b_{w_{c_{i,j}}} * d_{c_{i,j}}\right)$$

Soit :

[Math. 2]

$$d_{s_i} = \frac{PPCM\left(b_{w_{c_{i,1}}} * d_{c_{i,1}}, b_{w_{c_{i,2}}} * d_{c_{i,2}}, \ldots, b_{w_{c_{i,j}}} * d_{c_{i,j}}\right)}{a_{w_{c_i}}}$$

Dans l'exemple du programme $s_1$, équations régissant les fractions de temps de lecture peuvent donc être ré-écrites de la manière suivante :

$$6 * 3 * \lambda_{c_{1,1}} = 2 * d_{s_1};$$

$$10 * 12 * \lambda_{c_{1,2}} = 2 * d_{s_1};$$

$$15 * 12 * \lambda_{c_{1,3}} = 2 * d_{s_1}.$$

La durée minimale du programme $d_{s1}$ permettant de respecter la fraction de temps de lecture total allouée à chaque contenu au sein du programme est donc telle que :

[Math. 3]

$$2 * d_{s_1} = PPCM(6 * 3, 10 * 12, 15 * 12)$$

Soit encore :

[Math. 4]

$$d_{s_1} = \frac{PPCM(6*3, 10*12, 15*12)}{2} = \frac{PPCM(18,\ 120, 180)}{2} = \frac{360}{2} = 180$$

Enfin, une étape a24 consiste à calculer un nombre $\lambda_{ci,j}$ d'occurrences minimal de jeu de chaque contenu du programme permettant de respecter la fraction de temps de lecture allouée au contenu au sein du programme comme :

- la durée minimale $d_{si}$ du programme permettant de respecter la fraction de temps de lecture total allouée à chaque contenu au sein du programme multipliée par le numérateur de référence $a_{w_{c_i}}$ ; divisée par

- le dénominateur $b_{w_{c_i,j}}$ de la fraction de temps de lecture allouée au contenu au sein du programme multiplié par la durée du contenu $d_{ci,j}$.

Soit :

[Math5]

$$\lambda_{c_{i,j}} = \frac{a_{w_{c_i}} * d_{s_i}}{b_{w_{c_{i,j}}} * d_{c_{i,j}}}$$

Dans le cas du programme $s_1$ , on a alors :

$$\lambda_{c_{1,1}} = 2 * d_{s_i} / (6*3) = 2*180 / (6*3) = 20;$$

$$\lambda_{c_{1,2}} = 2 * d_{s_i} / (10*12) = 2*180 / (10*12) = 3\ ;$$

$$\lambda_{c_{1,3}} = 2 * d_{s_i} / (15*12) = 2*180 / (15*12) = 2.$$

A l'issue des étapes a21 à 24, on connaît donc:

- pour chaque programme, une durée minimale $d_{si}$ du programme permettant de respecter la fraction de temps de lecture total allouée à chaque contenu au sein du programme (par exemple $d_{s1}$ pour le programme $s_1$) ; et

- pour chaque contenu, un nombre d'occurrences minimal de jeu $\lambda_{ci,j}$ du contenu permettant de respecter fraction de temps de lecture allouée au contenu au sein du programme (par exemple $\lambda_{c1,1}$ pour le contenu $c_{1,1}$, $\lambda_{c1,2}$ pour le contenu $c_{1,2}$ et $\lambda_{c1,3}$ pour le contenu $c_{1,3}$).

Les calculs ont été détaillés ci-dessus dans l'exemple du programme $s_2$. Le lecteur étant maintenant familier avec les notations et calculs proposés, les résultats seront fournis directement pour les programmes $s_2$ et $s_3$. Les mêmes calculs évoqués ci-dessus appliqués au programme $s_2$ donnent :

- une durée minimale du programme $d_{s2}$ permettant de respecter la fraction de temps de lecture total allouée à chaque contenu au sein du programme= 120s ;

nombres d'occurrences minimaux de jeu de chaque contenu du programme permettant de respecter fraction de temps de lecture allouée au contenu au sein du programme $\lambda_{c2,1} = 5$, $\lambda_{c2,2} = 4$ et $\lambda_{c2,3} = 2$.Les mêmes calculs appliqués au programme $s_3$ donnent :

- une durée minimale du programme $d_{s3}$ permettant de respecter la fraction de temps de lecture total allouée à chaque contenu au sein du programme = 240s ;

nombres d'occurrences minimaux de jeu de chaque contenu du programme permettant de respecter fraction de temps de lecture allouée au contenu au sein du programme $\lambda_{c3,1} = 4$, $\lambda_{c3,3} = 4$ et $\lambda_{c3,3} = 5$.Dans l'hypothèse un unique programme est utilisé, le nombre d'occurrences minimal de jeu de chaque contenu permettant de respecter la fraction de temps de lecture total allouée à chaque contenu est alors égal au nombre d'occurrences minimal de jeu de chaque contenu du programme permettant de respecter fraction de temps de lecture allouée au contenu au sein d'un unique programme.

Il convient de noter que l'ordre présenté des étapes a21 à a24 n'est pas limitatif, et que les étapes peuvent être exécutées dans un ordre différent, à partir du moment où les durées et nombres d'occurrences déterminés aux étapes a23 et a24 ne sont pas modifiés.

Dans d'autres cas, où plusieurs programmes sont utilisés, les durées minimales et nombre d'occurrences doivent encore être définis entre les programmes. Dans ce cas, les étapes a25 à a28 décrites ci-dessous peuvent être mises en œuvre.

Ces étapes seront illustrées par l'exemple des programmes $s_1$, $s_2$ et $s_3$, dans lequel les fractions de temps de lecture total allouées à chaque programme sont respectivement $SOT_1$ = 2/3, $SOT_2$ = 1/4, et $SOT_3$ = 1/12.

Les données suivantes seront considérées :

- les fractions de temps de lecture allouées à chaque programme i seront notées $SOT_i$, soit respectivement $SOT_1$, $SOT_2$ et $SOT_3$ pour les programmes $s_1$, $s_2$ et $s_3$ ;

- les nombres d'occurrences minimaux de jeu de chaque programme i permettant de respecter fraction de temps de lecture allouée au programme sont notés $SOC_i$ respectivement $SOC_1$, $SOC_2$ et $SOC_3$ pour les programmes $s_1$, $s_2$ et $s_3$;

- la durée minimale de lecture totale permettant de respecter la fraction de temps de lecture total allouée à chaque programme est notée OPD. Cette durée sera également appelée « durée optimale ».

Le respect des fractions de temps de lecture total allouées à chaque programme implique que :

$$d_{s_1} * SOC_1 = SOT_1 * OPD ;$$

$$d_{s_2} * SOC_2 = SOT_2 * OPD ;$$

$$d_{s_3} * SOC_3 = SOT_3 * OPD.$$

Soit avec les fractions connues de $SOT_1$, $SOT_2$ et $SOT_3$:

$$d_{s_1} * SOC_1 = 2 / 3 * OPD ;$$

$$d_{s_2} * SOC_2 = 1 / 4 * OPD ;$$

$$d_{s_3} * SOC_3 = 1 / 12 * OPD.$$

Dans l'étape a25, on définit un coefficient multiplicateur de durée totale comme le petit commun multiple des numérateurs des fractions de temps de lecture allouées aux programmes.

Dans l'exemple, ce coefficient multiplicateur est donc égal à PPCM (2, 1, 1) = 2.

Dans une étape a26, on exprime les fractions de temps de lecture allouées aux programmes de manière à ce que le numérateur de chaque fraction de temps de lecture total allouée au programme soit égal audit coefficient multiplicateur de durée totale. On obtient alors dans l'exemple :

$$d_{s_1} * SOC_1 = 2 / 3 * OPD ;$$

$$d_{s_2} * SOC_2 = 2 / 8 * OPD ;$$

$$d_{s_3} * SOC_3 = 2 / 24 * OPD.$$

Dans l'étape a27, on calcule une durée minimale de lecture totale de la liste de lecture OPD permettant de respecter la fraction de temps de lecture total allouée à chaque programme comme :

- le plus petit commun multiple des dénominateurs des fractions de temps de lecture total allouées aux programmes multipliés par les durées minimales des programmes permettant de respecter la fraction de temps de lecture total allouée à chaque contenu; divisé par

- le coefficient multiplicateur de durée totale.

En effet, les équations ci-dessus peuvent être ré-écrites comme :

$$3 * d_{s_1} * SOC_1 = 2 * \text{OPD} \ ;$$

$$8 * d_{s_2} * SOC_2 = 2 * \text{OPD} \ ;$$

$$24 * d_{s_3} * SOC_3 = 2 * \text{OPD}.$$

La durée minimale de lecture totale permettant de respecter la fraction de temps de lecture total allouée à chaque contenu est donc telle que :

[Math. 3]

$$2 * OPD = PPCM\big(3 * d_{s_1}, 8 * d_{s_2}, 24 * d_{s_3}\big)$$

Soit encore :

[Math. 4]

$$OPD = \frac{PPCM(3 * 180, 8 * 120, 24 * 240)}{2} = \frac{PPCM(540, 960, 5760)}{2} = \frac{17280}{2} = 180$$

La durée optimale est donc dans cet exemple 8640 secondes, soit 2,4 h.

Dans une étape a28, on calcule un nombre d'occurrences minimal de jeu de chaque programme permettant de respecter fraction de temps de lecture allouée au programme comme :

- la durée minimale de lecture totale de la liste de lecture OPD permettant de respecter la fraction de temps de lecture total allouée à chaque contenu multipliée par le coefficient multiplicateur de durée totale ; divisée par
- le dénominateur de la fraction de temps de lecture total allouée au programme multiplié par la durée minimale du programme permettant de respecter la fraction de temps de lecture total allouée à chaque contenu.

En effet, les équations ci-dessus peuvent se ré-écrire :

$$SOC_1 = 2 * \text{OPD} / (3 * d_{s_1}) \ ;$$

$$SOC_2 = 2 * \text{OPD} / (8 * d_{s_2}$$

$$SOC_3 = 2 * \text{OPD} / (24 * d_{s_3}$$

A ce stade, on connaît donc la durée minimale de lecture totale OPD permettant de respecter la fraction de temps de lecture total allouée à chaque programme, ainsi que les nombres d'occurrences minimal de jeu de chaque programme permettant de respecter fraction de temps de lecture allouée au programme.

Il est alors possible de déterminer le nombre d'occurrences minimal de jeu de chaque contenu permettant de respecter la fraction de temps de lecture total allouée à chaque contenu dans la liste de lecture comme le nombre d'occurrences minimal $\lambda_{ci,j}$ de jeu de chaque contenu du programme permettant de respecter la fraction de temps de lecture allouée au contenu au sein du programme multiplié par le nombre d'occurrences minimal de jeu $SOC_i$ de chaque programme permettant de respecter fraction de temps de lecture allouée au programme.

Par exemple, pour le contenu $c_{1,1}$, le nombre d'occurrences minimal de jeu de $c_{1,1}$ permettant de respecter la fraction de temps de lecture total allouée à $c_{1,1}$ au sein de la liste de lecture est égal à $\lambda_{c1,1}$ * $SOC_i$ = 32 * 20 = 640.

On constate que les nombres d'occurrences minimaux de jeu de contenus, ainsi que la durée optimale de lecture totale peuvent être très élevés. Les listes de lecture permettant de respecter strictement les fractions de temps allouées à chaque contenu peuvent donc s'avérer très longues. Dans l'exemple, l'identifiant de contenu $c_{1,1}$ devrait par exemple être répété 640 fois dans la liste. Ceci peut augmenter la taille de la liste à transmettre, et les besoins de bande passante associés pour la transmission.

Dans l'exemple des programmes $s_1$, $s_2$ et $s_3$, les nombres d'occurrences de chaque contenu au sein d'un programme, et nombre total d'occurrences sont ainsi respectivement les suivants :

[Tableau 4]

| Identifiant de contenu | Durée | Fraction de temps de lecture $W_{c1,j}$ au sein du programme $s_1$ | Nombre d'occurrences minimal de lecture $\lambda_{c1,j}$ au sein du programme $s_1$ | Nombre d'occurrences total |
|---|---|---|---|---|
| $c_{1,1}$ | 6 | 2/3 | 20 | 640 (=32*20) |
| $c_{1,2}$ | 10 | 1/6 | 3 | 96 (=32*3) |
| $c_{1,3}$ | 15 | 1/6 | 2 | 64 (=32*2) |

[Tableau 5]

| Identifiant de contenu | Durée | Fraction de temps de lecture $W_{c2,j}$ au sein du programme $s_2$ | Nombre d'occurrences minimal de lecture $\lambda_{c2,j}$ au sein du programme $s_2$ | Nombre d'occurrences total |
|---|---|---|---|---|
| $c_{2,1}$ | 8 | 1/3 | 5 | 90 |
| $c_{2,2}$ | 10 | 1/3 | 4 | 72 |
| $c_{2,3}$ | 20 | 1/3 | 2 | 36 |

[Tableau 6]

| Identifiant de contenu | Durée | **Fraction** de temps de lecture $W_{c3,j}$ au sein du programme $s_3$ | Nombre d'occurrences minimal de lecture $\lambda_{c3,j}$ au sein du programme $s_3$ | Nombre d'occurrences total |
|---|---|---|---|---|
| $c_{3,1}$ | 30 | 1/2 | 4 | 12 |
| $c_{3,2}$ | 15 | 1/4 | 4 | 12 |
| $c_{3,3}$ | 12 | 1/4 | 5 | 15 |

Afin de réduire les besoins de bande passante pour la transmission, une sous-étape a3 de réduction du nombre d'occurrences d'au moins un contenu peut être mise en œuvre.

En pratique, cette étape consiste à réduire le nombre d'occurrences à insérer dans la liste pour au moins un contenu, tout en prenant en compte les nombres d'occurrences minimales de chaque contenu permettant de respecter la fraction de temps de lecture total allouée à chaque contenu et/ou la durée minimale de la liste permettant de respecter la fraction de temps de lecture total allouée à chaque contenu.

Dans un ensemble de modes de réalisations décrits ci-dessous, l'étape a) comprend une sous-étape a3 et/ou une sous-étape a5.

Une sous-étape a5 consiste à vérifier si la liste de lecture respecte au moins un critère choisi dans une liste comprenant un critère de durée de la liste de lecture et un critère de taille de la liste de lecture.

Dit autrement, l'au moins un critère est validé à l'étape a5 si :

- La taille de la liste est inférieure à un seuil. La taille de la liste peut par exemple consister en :

  ◦ un nombre d'occurrences de contenus dans la liste ;

  ◦ ou une taille des données stockant la liste, ladite taille pouvant par exemple être exprimée en octets ou kilooctets;

- et/ou la durée de liste, c'est-à-dire la somme des durées de chaque occurrence de contenu à jour, est inférieure à un seuil.

Si l'au moins un critère est validé à l'étape a5, on considèrera donc que la liste est suffisamment légère et/ou courte, c'est-à-dire que l'envoi de la liste mobilisera une quantité limité de ressources réseau.

Dans le mode de réalisation représenté, à titre d'exemple non-limitatif, en figure 3, si l'au moins un critère est validé (c'est-à-dire si la liste de lecture est considérée comme suffisamment légère et/ou courte, il est procédé à une étape a4 de transmission de la liste. Si au contraire au moins un critère n'est pas validé (c'est-à-dire si la liste est considérée comme trop longue et/ou trop lourde), il est procédé, préalablement à la sous-étape a4 de transmission de la liste, à une sous-étape a3 de réduction de la taille de liste.

La sous-étape a3 permet de réduire la taille de la liste, et donc la quantité de données à transmettre in fine.

L'étape a3 peut par exemple être mise en œuvre en divisant le nombre total d'occurrences de chaque contenu par un même diviseur, en approximant les nombres totaux d'occurrences de contenus qui ne sont pas divisibles par le diviseur.

Le diviseur peut être choisi arbitrairement, ou pour atteindre un objectif de réduction du nombre d'occurrences / de durée de la piste. Le diviseur peut encore être choisi pour obtenir une division exacte du plus grand nombre d'identifiants de contenus possibles. Par exemple, dans le cas des programmes $s_1$, $s_2$ et $s_3$, une division par 3 permettra une division exacte du nombre de contenus des programmes $s_2$ et $s_3$, et une division approximée du nombre de contenus du programme $s_1$.

Selon différents modes de réalisation de l'invention, l'étape a3 peut être systématiquement mise en œuvre, ou mise en œuvre que lorsque certaines conditions sont remplies.

Par exemple, l'étape a3 de réduire le nombre d'occurrences d'au moins un contenu peut n'être mise en œuvre que si un ensemble de conditions comprenant au moins une parmi des conditions suivantes est respecté :

- la somme des nombres d'occurrences minimales de chaque contenu permettant de respecter la fraction de temps de lecture total allouée à chaque contenu est supérieur à un seuil de nombre d'occurrences ;

- la durée minimale de la liste permettant de respecter la fraction de temps de lecture total allouée à chaque contenu est supérieure à un seuil de durée.

Dit autrement, dans ce cas, l'étape a3 n'est mise en œuvre que si le nombre total d'occurrences d'identifiants à insérer est supérieur à un seuil de nombre d'occurrences et/ou la durée minimale de la liste est supérieure à un seuil de durée. Les seuils de nombre d'occurrences et/ou de durée peuvent être définis de différentes manières. Par exemples, ils peuvent être définis en fonction d'une taille limite de piste de lecture permettant de limiter suffisamment la bande passante utilisée pour la transmission, ou une durée maximale de la piste de lecture permettant un chargement efficace dans les dispositifs de lecture.

Selon ces modes de réalisation, il sera donc considéré qu'une liste peut être suffisamment légère si elle comprend un nombre d'occurrences d'identifiants suffisamment faible et/ou une durée suffisamment courte. Dans ce cas, le pattern optimal permettant de respecter strictement la fraction de temps de lecture total allouée à chaque contenu sera utilisé. Dans le cas contraire, l'étape a3 sera enclenchée pour réduire la taille (en nombre d'identifiants) et/ou la durée de la liste de lecture.

Différentes actions peuvent être mises en œuvre dans le cadre de l'étape a3. Par exemple, dans des modes de réalisation ou les contenus sont répartis selon plusieurs programmes, et où l'étape a3 n'est mise en œuvre que si un ensemble de conditions est respecté, l'étape a3 peut comprendre la suppression d'au moins un des programmes afin de respecter ledit ensemble de conditions.

Reprenant l'exemple des programmes $s_1$, $s_2$ et $s_3$ tels que définis ci-dessus, imaginons qu'une limite de durée de la piste de lecture soit définie à 1h.

A l'issue de l'étape a2, la durée de lecture selon le pattern optimal, c'est-à-dire la durée minimale de lecture totale permettant de respecter la fraction de temps de lecture total allouée à chaque programme, a été calculé comme étant égal à 2,4h, soit supérieur à la limite d'une heure.

L'un au moins des programmes peut ainsi être supprimé, et la durée minimale OPD recalculée sans l'au moins un programme supprimé, afin de ramener la durée minimale de lecture totale permettant de respecter la fraction de temps de lecture total allouée à chaque programme. En effet, la suppression d'un ou plusieurs programmes permet de diminuer le nombre de contenus à jouer, et donc de simplifier la combinatoire des durées et nombre d'occurrences des contenus pour respecter les fractions de temps de jeu total.

Par exemple :

- en supprimant $s_1$, et en ne conservant que $s_2$ et $s_3$, la durée minimale OPD sera ramenée à PPCM(960, 5760) / 2 = 2880s, soit environ 0,8h ;

- en supprimant $s_2$, et en ne conservant que $s_1$ et $s_3$, la durée minimale OPD sera ramenée à PPCM(540, 5760) / 2 = 8640s, soit environ 2,4h ;

- en supprimant $s_3$, et en ne conservant que $s_1$ et $s_2$, la durée minimale OPD sera ramenée à PPCM(540, 960) / 2 = 4320s, soit environ 1,2h.

On constate donc ici que la suppression de $s_2$ ne produit aucun effet sur la durée de la piste de lecture, que la suppression de $s_3$ divise la durée par 2 ce qui reste insuffisant pour obtenir une liste de moins d'une heure, et enfin que la suppression de $s_1$ divise la durée par 3, ce qui permet d'obtenir une liste de 0,8h environ, ce qui est inférieur à la limite d'une heure. La suppression de $s_1$ peut donc être retenue pour réduire la durée de la liste. Le même principe peut être appliqué pour réduire le nombre d'occurrences d'identifiants de contenus dans la liste. Selon différents modes de réalisation, un ou plusieurs programmes peuvent être supprimés.

Dans le cas où plusieurs suppressions permettent de respecter les conditions définies, la solution la plus proche des conditions limites (par exemple la suppression permettant la durée la plus élevée restant en dessous de 1h) peut être retenue.

Si la suppression d'un seul programme ne permet pas de respecter les conditions définies, la suppression de deux programmes peut être envisagée.

Un diviseur de la durée de la liste de lecture ainsi obtenue sans tenir compte tu ou des programmes supprimés peut ensuite être déterminé. Dans l'exemple ci-dessus, la durée de la piste de lecture a été divisée par 3 en supprimant $s_1$. En pratique, cette division par 3 correspond à une division exacte rendue possible en supprimant $s_1$, car les nombres d'occurrences des contenus de $s_1$ n'étaient pas divisibles par 3, alors que ceux de $s_2$ et $s_3$ l'étaient.

Enfin, le ou les programmes supprimés peuvent être remplacés par une approximation de la division des nombres totaux d'occurrences des contenus du programme par le diviseur.

Ainsi, la taille et la durée de la liste peuvent être divisée par un diviseur donné en obtenant une approximation aussi exacte que possible, puisque la division du nombre d'occurrences est exacte pour au moins un programme.

Reprenant l'exemple de $s_1$, $s_2$ et $s_3$, les nombres d'occurrences total peuvent ainsi être divisés par 3 en approximant les nombres d'occurrences pour $s_1$ seulement. On peut par exemple obtenir les résultats suivants :

[Tableau 7]

| Identifiant de contenu | Durée | Fraction de temps de lecture au sein du programme $s_1$ | Nombre d'occurrences de lecture au sein du programme $s_1$ | Nombre d'occurrences total |
|---|---|---|---|---|
| $c_{1,1}$ | 6 | 2/3 | 20 | 203 |
| $c_{1,2}$ | 10 | 1/6 | 3 | 34 |
| $c_{1,3}$ | 15 | 1/6 | 2 | 24 |

[Tableau 8]

| Identifiant de contenu | Durée | Fraction de temps de lecture au sein du programme $s_2$ | Nombre d'occurrences de lecture au sein du programme $s_2$ | Nombre d'occurrences total |
|---|---|---|---|---|
| $c_{2,1}$ | 8 | 1/3 | 5 | 30 |
| $c_{2,2}$ | 10 | 1/3 | 4 | 24 |
| $c_{2,3}$ | 20 | 1/3 | 2 | 12 |

[Tableau 9]

| Identifiant de contenu | Durée | Fraction de temps de lecture au sein du programme $s_3$ | Nombre d'occurrences de lecture au sein du programme $s_3$ | Nombre d'occurrences total |
|---|---|---|---|---|
| $c_{3,1}$ | 30 | 1/2 | 4 | 4 |
| $C_{3,2}$ | 15 | 1/4 | 4 | 4 |
| $c_{3,3}$ | 12 | 1/4 | 5 | 5 |

On constate que, pour les contenus des programmes $s_2$ et $s_3$, le nombre d'occurrence total correspond bien à une division exacte par 3 des nombres d'occurrences dans le pattern optimal, alors que, pour le programme $s_1$, il s'agit d'une division approximée par 3.

Les fractions de temps réellement obtenues pour les programmes $s_1$, $s_2$ et $s_3$ sont donc 0,666435, 0,250173 et 0,0833941, très proches respectivement des fractions allouées 2/3, ¼ et 1/12.

Cet exemple démontre que la taille et la durée de la piste de lecture peuvent être sensiblement réduites, tout en conservant une approximation raisonnable des fractions de temps allouées à chaque contenu.

Selon différents modes de réalisation, l'approximation de la division des nombres totaux d'occurrences des contenus du programme par le diviseur peut s'effectuer en pratique de différentes manières.

Dans un ensemble de modes de réalisation, a3) réduire le nombre d'occurrences d'au moins un contenu comprend incrémenter ou décrémenter itérativement les nombres totaux des contenus du contenu du plus long au moins long afin de réduire un reste d'une division euclidienne des nombres totaux des contenus par un diviseur.

Quelques exemples concrets de telles divisions sont donnés ci-dessous.

## 1e exemple d'approximation de division

Reprenant l'exemple des programmes $s_1$, $s_2$ et $s_3$, si la durée de la piste de lecture est recalculée en supprimant $s_1$, on obtient, sur la base des seuls programmes $s_2$ et $s_3$, une durée de lecture permettant de respecter les fractions de temps de lecture allouées aux programmes OPD = 2880s, on a alors :

- Pour $s_2$: 960 * $SOC_2$ = 2 * OPD, soit $SOC_2$ = 6 ;

- Pour $s_3$ : 5760 * $SOC_3$ = 2 * OPD, soit $SOC_3$ = 1.

Pour $s_1$, on effectue la division euclidienne de 2 * OPD par 540 : 2 * OPD = 5760 = 540 * 10 + 360 = 3 * (6 * $\lambda_{c1,1}$ + 10 * $\lambda_{c1,1}$ + 15 * $\lambda_{c1,1}$) * 10 + 360 = 18 * ($\lambda_{c1,1}$*10) + 30 * ($\lambda_{c1,2}$ * 10) + 45 * ($\lambda_{c1,3}$ * 10) + 360 = 18 * 200 + 30 * 30 + 45 * 20 + 360.

Dans l'équation 2 * OPD = 18 * 200 + 30 * 30 + 45 * 20 + 360, les termes occ1 = 200, occ2 = 30 et occ3 = 20 représentent respectivement les nombres totaux d'occurrences de jeu des contenus $c_{1,1}$, $c_{1,2}$ et $c_{1,3}$ dans la liste de lecture.

On va alors essayer d'éliminer le reste r = 360 en incrémentant progressivement les occurrences des contenus $c_{1,1}$, $c_{1,2}$ et $c_{1,3}$. Pour cela, on ordonne les coefficients par ordre décroissants du coefficient multiplicateur 45 > 30 > 18 correspondant à une multiplication des durées de contenus par 3, c'est-à-dire que l'on incrémentera en premier lieu le nombre d'occurrences occ3 de $c_{1,3}$, puis occ2 de $c_{1,2}$, puis occ1 de $c_{1,1}$, avant d'itérer à nouveau en incrémentant en premier occ3.

Dans une première itération, r = 360 > 45, on incrémente alors occ3 pour réduire r : occ3 = occ3 + 1 = 21, et r = r - 45 = 315.

Puis on passe au coefficient 30 : r = 315 > 30, on incrémente alors occ2 pour réduire r : occ2 = occ2 + 1 = 31, et r = r - 30 = 285.

Et ainsi de suite avec le coefficient 18, puis en repartant à 45, pour une nouvelle itération.

A l'issue de plusieurs itérations d'incrémentations, on termine avec occ1 = 203, occ2 = 34, occ3 = 24, et r=6 < 18 < 30 < 45, on arrête donc les itérations.

On parvient ainsi à la solution montrée dans les tableaux 7 à 9.

## 2e exemple d'approximation de division

Reprenant l'exemple des programmes $s_1$, $s_2$ et $s_3$, si la durée de la piste de lecture est recalculée en supprimant $s_1$, on obtient, sur la base des seuls programmes $s_2$ et $s_3$, une durée de lecture permettant de respecter les fractions de temps de lecture allouées aux programmes OPD = 2880s, on a alors :

- Pour $s_2$: $960 * SOC_2 = 2 * OPD$, soit $SOC_2 = 6$ ;

- Pour $s_3$ : $5760 * SOC_3 = 2 * OPD$, soit $SOC_3 = 1$.

On suppose ici que $3*d1 = 6000 > 2 * OPD$.
On a donc :

$$2 * OPD = 5760 = 6000 * 0 + 5760 ;$$

$$3 * d1 = 3 * (6 * \lambda_{c_{1,1}} + 10 * \lambda_{c_{1,2}} + 15 * \lambda_{c_{1,3}}) = 18 * \lambda_{c_{1,1}} + 30 * \lambda_{c_{1,2}} + 45 * \lambda_{c_{1,3}}.$$

Dans cet exemple, on supprime des occurrences pour ramener le produit de $3 * d1$ à $2 * OPD = 5760$, c'est-à-dire qu'on va remplir l'encart $e = 3 * d1 - 2 * OPD = 6000 - 5760 = 240$ par les entités 18, 30 et 45 en décrémentant les nombres d'occurrences.
On ordonne encore les coefficients par ordre décroissant $45 > 30 > 18$, puis on remplit itérativement les 3 coefficients.
Dans une première itération, $e = 240$, puis :

- $e > 45$, donc $e = e - 45 = 195$, et occ3-- = 19

- $e > 30$, donc $e = e - 30 = 165$, et occ2-- = 2 ;

- etc.

A l'issue de plusieurs itérations, on obtient $\lambda_{c1,1} = 17$, $\lambda_{c1,2} = 1$, $\lambda_{c1,3} = 0$, et $e = 9$. Comme $e < 18 < 30 < 45$, les itérations s'arrêtent ici et l'approximation est obtenue.

**3e exemple d'approximation de division**

Dans cet exemple, on vise une durée limite de la liste de lecture $L = 2100s$ ; et deux programmes sont considérés :
Un programme $s_4$, avec une fraction de temps de lecture $SOT_4 = 1/3$, est défini comme :

[Tableau 10]

| Identifiant de contenu | Durée | Fraction de temps de lecture $W_{c4,j}$ au sein du programme $s_4$ |
|---|---|---|
| $c_{4,1}$ | 7 | 1/3 |
| $c_{4,2}$ | 10 | 1/3 |
| $c_{4,3}$ | 11 | 1/3 |

La durée minimale de $s_4$ $d_{s4}$ permettant de respecter la fraction de temps de lecture total allouée à chaque contenu au sein du programme $s_4$ est donc égale à : $d_{s4} = 3 * PPCM(7,10,11) = 3 * 7 * 10 * 11 = 3 * 770 = 2310\ s > L$.
Un programme $s_5$, avec une fraction de temps de lecture $SOT_5 = 2/3$, est défini comme :

[Tableau 11]

| Identifiant de contenu | Durée | Fraction de temps de lecture $W_{c5,j}$ au sein du programme $s_5$ |
|---|---|---|
| $c_{5,1}$ | 7 | 1/3 |
| $c_{5,2}$ | 20 | 1/3 |
| $c_{5,3}$ | 11 | 1/3 |

La durée minimale de $s_5$ $d_{s5}$ est donc égale à : $d_{s5} = 3 * PPCM(7,20,11) = 3 * 7 * 20 * 11 = 3 * 1540 = 4620\ s > L$.
Dans le pattern optimal $s_4$ est joué une fois et $s_5$ une fois (respectivement 1/3 et 2/3 du temps alloué, étant entendu que $s_5$ est deux fois plus long que $s_4$), on a donc une durée minimale permettant de respecter les fractions de temps allouées à tous les contenus $OPD = 2310 + 4620 = 6930\ s$.

Afin de réduire la durée de la liste de lecture à la limite L, on applique ici un diviseur, ou coefficient de division d = L / OPD = 2100 / 6930.

On obtient donc les nombres d'occurrences optimales et réduites suivantes :

[Tableau 12]

| Identifiant de contenu | Durée | Occ optimale | Occ réduite | Reste = décimal * durée |
|---|---|---|---|---|
| $c_{4,1}$ | 7 | 110 | 33,33333 | 2,33333 |
| $c_{4,2}$ | 10 | 77 | 23,33333 | 3,33333 |
| $c_{4,3}$ | 11 | 70 | 21,21212 | 2,33333 |
| Total des restes | | | | 8 |

**[0212]** Un programme $s_5$, avec une fraction de temps de lecture $SOT_5$ = 2/3, est défini comme :

[Tableau 13]

| Identifiant de contenu | Durée | Occ optimale | Occ réduite | Reste = décimal * durée |
|---|---|---|---|---|
| $c_{5,1}$ | 7 | 220 | 66,66666 | 4,66666 |
| $c_{5,2}$ | 20 | 77 | 23,33333 | 6,66666 |
| $c_{5,3}$ | 11 | 140 | 42,42424 | 4,66666 |
| Total des restes | | | | 16 |

Au sein de chaque programme, on incrémente les occurrences de manière itérative, du contenu ayant la durée la plus longue au contenu ayant la durée la plus courte, afin de réduire le reste.

Pour $s_4$, on ordonne les contenus dans l'ordre des durées 11 > 10 > 7.

On a un reste r = 8 < 11, et r < 10. Ni le nombre d'occurrences de $c_{4,2}$, ni le nombre d'occurrences de $c_{4,3}$ ne sont donc incrémentés.

En revanche, r < 7, on incrémente donc le nombre d'occurrences de $c_{4,1}$, et on retranche 7 du reste : r = r - 7 = 8 - 7 = 1. Plus aucune incrémentation n'est possible, et on obtient les occurrences réduites finales suivantes :

[Tableau 13]

| Identifiant de contenu | Durée | Occ optimale | Occ réduite | Occ réduite finale |
|---|---|---|---|---|
| $c_{4,1}$ | 7 | 110 | 33,33333 | 34 |
| $c_{4,2}$ | 10 | 77 | 23,33333 | 23 |
| $c_{4,3}$ | 11 | 70 | 21,21212 | 21 |

Pour $s_5$, on ordonne les contenus dans l'ordre des durées 20 > 11 > 7.

On a un reste r = 16 < 20 Le nombre d'occurrences de $c_{5,2}$ n'est donc pas incrémenté.

En revanche, r > 11 on incrémente donc le nombre d'occurrences de $c_{5,3}$, et on retranche 11 du reste : r = r - 11 = 5. Plus aucune incrémentation n'est possible puisque r = 5 < 7 < 11 < 20, et on obtient les occurrences réduites finales suivantes :

[Tableau 14]

| Identifiant de contenu | Durée | Occ optimale | Occ réduite | Occ réduite finale |
|---|---|---|---|---|
| $c_{5,1}$ | 7 | 220 | 66,666666 | 66 |
| $c_{5,2}$ | 20 | 77 | 23,33333 | 23 |
| $c_{5,3}$ | 11 | 140 | 42,42424 | 43 |

La durée finale du pattern réduit est égale à 34 * 7 + 23 * 10 + 21 * 11 + 66 * 7 + 23 * 20 + 43 * 11 = 2094 s < L (2100s).

Les fractions réelles de temps accordées à $s_4$ et $s_5$ sont respectivement 699 / 2094 = 0,33381, et 1395 / 2094 = 0,66618, très proches des fractions de temps de lecture total allouées aux programmes de 1/3 et 2/3.

On constate donc encore que la durée de la liste et les ombres d'occurrences des identifiants de contenus sont significativement réduit, tout en ayant une très bonne approximation des fractions de temps de lecture total allouées aux programmes et aux contenus.

De retour à la figure 3, l'étape a) comprend une sous-étape a4) d'insérer dans la liste des identifiants de contenus numériques à lire.

En pratique l'étape a4 consiste à écrire le contenu de la liste avec les identifiants de contenu.

Les occurrences des identifiants peuvent être insérés de différentes manières, à partir du moment où le nombre d'occurrences de chaque contenu est respecté. Par exemple, elles peuvent être insérées de manière aléatoire, ou en espaçant de manière aussi régulière que possible les occurrences d'un même contenu.

Chaque identifiant d'un contenu numérique peut être inséré :

- selon le nombre réduit d'occurrences du contenu, si la sous-étape étape a3 a été exécutée ;

- selon le nombre minimal d'occurrences de contenu permettant de respecter de manière stricte les fractions de temps de lecture respectives de chaque contenu, si la sous-étape a3 n'a pas été exécutée.

A l'issue de l'étape a4, la liste peut donc être définie avec :

- Le nombre minimal d'occurrences de contenu permettant de respecter de manière stricte les fractions de temps de lecture respectives de chaque contenu. Dans ce cas, la liste transmise est la liste la plus courte/légère permettant de respecter de manière stricte les temps de lecture respectifs de chaque contenu ;

- un nombre d'occurrences réduites fournissant une approximation satisfaisante des fractions de temps allouées à chaque contenu. Dans ce cas, la liste de lecture peut donc être transmise avec une utilisation de bande passante encore réduite tout en approximant de manière satisfaisante les fractions respectives de temps de lecture respectifs de chaque contenu.

Comme indiqué ci-dessus, la figure 3 est fournie à titre d'exemple non limitatif uniquement d'un mode de réalisation de l'invention. Selon d'autres modes de réalisation de l'invention, les sous-étapes a3 et/ou a5 peuvent ne pas être implémentées, et l'articulation entre les sous-étapes a3, a4 et a5 peut être différentes. Par exemple :

- Aucune des sous-étapes a3 et a5 peut n'être implémentée. Dans ce cas, la liste de lecture est systématiquement transmise selon le nombre d'occurrences minimale permettant de respecter de manière stricte les fractions respectives de temps de lecture de chaque contenu ;

- la sous-étape a3 peut être implémentée, mais pas la sous-étape a5. Dans ce cas, la sous-étape a3 de réduction de la taille de la liste est systématiquement mise en œuvre pour réduire la taille de la liste, notamment en conservant une approximation acceptable des fractions respectives de temps de lecture des contenus ;

- la sous-étape a5 peut être implémentée, mais pas la sous-étape a3. Dans ce cas, la liste de lecture n'est transmise que si l'au moins un critère est validé à la sous-étape a5.

La présente divulgation ne se limite pas aux exemples de procédé, système, et moteur d'apprentissage automatique supervisé décrits ci-avant, seulement à titre d'exemple, mais elle englobe toutes les variantes que pourra envisager l'homme de l'art dans le cadre de la protection recherchée.

## Revendications

1. Procédé mis en œuvre par au moins un serveur (7) de commande d'affichage de contenus numériques par des dispositifs d'affichage digital (2), comprenant :

   a) générer des listes de lecture en fonction de campagnes d'affichage, chaque liste de lecture étant destinée à être lue par un ou plusieurs desdits dispositifs d'affichage digital (2), chaque liste de lecture comprenant au moins une série d'identifiants de contenus numériques à lire mais ne comprenant pas d'adresses de chargement des contenus numériques ni d'empreintes numériques des contenus numériques, générer une liste de lecture en fonction d'une campagne d'affichage comprenant :

a1) recevoir un ensemble d'identifiants de contenus numériques ($c_{i,j}$) à lire, chaque identifiant étant associé à une durée de contenu et une fraction de temps de lecture total allouée audit contenu dans la campagne d'affichage ;

a2) calculer un nombre d'occurrences minimal de jeu de chaque contenu permettant de respecter la fraction de temps de lecture total allouée à chaque contenu dans la liste de lecture ;

a4) insérer dans la liste des identifiants de contenus numériques à lire;

e) transmettre au moins une desdits listes de lecture à un ou plusieurs desdits dispositifs d'affichage digital (2) auxquels l'au moins une desdits listes de lecture est destinée.

2. Procédé selon la revendication 1 :

- comprenant a3) réduire le nombre d'occurrences d'au moins un contenu;
- dans lequel chaque identifiant d'un contenu numérique est inséré selon le nombre réduit d'occurrences dudit contenu.

3. Procédé selon l'une quelconque des revendications précédentes, comprenant a5) vérifier si la liste de lecture respecte au moins un critère choisi dans une liste comprenant un critère de durée de la liste de lecture et un critère de taille de la liste de lecture, et :

- si la liste de lecture respecte ledit au moins un critère, chaque identifiant d'un contenu numérique est inséré dans la liste selon le nombre d'occurrences minimal de jeu de chaque contenu permettant de respecter la fraction de temps de lecture total allouée à chaque contenu ;
- sinon :

  - Le procédé comprend a3) réduire le nombre d'occurrences d'au moins un contenu ;
  - chaque identifiant d'un contenu numérique est inséré dans la liste selon le nombre réduit d'occurrences dudit contenu.

4. Procédé selon l'une quelconque des revendications précédentes, dans lequel les identifiants de contenus sont répartis par programmes ($s_i$), et :

- chaque identifiant de contenu est associé à une fraction de temps de lecture allouée au contenu au sein du programme ($W_{c_{i,j}}$) ;
- chaque programme est associé à une fraction de temps de lecture total allouée au programme ($SOT_i$).

5. Procédé selon la revendication 4, dans lequel calculer un nombre d'occurrences minimal de jeu de chaque contenu permettant de respecter la fraction de temps de lecture total allouée à chaque contenu dans la liste de lecture comprend pour chaque programme :

a21) déterminer un numérateur de référence du programme ( $a_{w_{c_i}}$ ) comme le petit commun multiple des numérateurs des fractions de temps de lecture allouées aux contenus au sein du programme ;

a22) exprimer les fractions de temps de lecture allouées aux contenus au sein du programme de manière à ce que le numérateur de chaque fraction de temps de lecture allouée à un contenu au sein du programme soit égal audit numérateur de référence du programme ( $a_{w_{c_i}}$ ) ;

a23) calculer une durée minimale du programme permettant de respecter la fraction de temps de lecture total allouée à chaque contenu au sein du programme ($d_{si}$) comme :

  ◦ le plus petit commun multiple des dénominateurs des fractions de temps de lecture allouées aux contenus au sein du programme ( $b_{w_{c_{i,j}}}$ ) multipliés par les durées des contenus ($d_{c_{i,j}}$) ; divisé par

  ◦ le numérateur de référence du programme ( $a_{w_{c_i}}$ ) ;

a24) calculer un nombre ($\lambda_{c_{i,j}}$) d'occurrences minimal de jeu de chaque contenu du programme permettant de respecter la fraction de temps de lecture allouée au contenu au sein du programme comme :

  ◦ la durée minimale du programme ($d_{si}$) permettant de respecter la fraction de temps de lecture total allouée à chaque contenu au sein du programme multipliée par le numérateur de référence du programme ; divisée par
∘ le dénominateur de la fraction de temps de lecture allouée au contenu au sein du programme multiplié par la durée du contenu.

**6.** Procédé selon la revendication 5, dans lequel calculer un nombre d'occurrences minimal de jeu de chaque contenu permettant de respecter la fraction de temps de lecture total allouée à chaque contenu dans la liste de lecture comprend ensuite:

a25) définir un coefficient multiplicateur de durée totale comme le petit commun multiple des numérateurs des fractions de temps de lecture allouées aux programmes ;
a26) exprimer les fractions de temps de lecture allouées aux programmes ($SOT_i$) de manière à ce que le numérateur de chaque fraction de temps de lecture total allouée au programme soit égal audit coefficient multiplicateur de durée totale ;
a27) calculer une durée minimale de lecture totale de la liste de lecture (OPD) permettant de respecter la fraction de temps de lecture total allouée à chaque programme comme :

∘ le plus petit commun multiple des dénominateurs des fractions de temps de lecture total allouées aux programmes ($SOT_i$) multipliés par les durées minimales des programmes ($d_{si}$) permettant de respecter la fraction de temps de lecture total allouée à chaque contenu au sein des programmes; divisé par
∘ le coefficient multiplicateur de durée totale ;

a28) calculer un nombre d'occurrences minimal de jeu de chaque programme ($SOC_i$)permettant de respecter fraction de temps de lecture allouée au programme comme :

∘ la durée minimale de lecture totale de la liste de lecture (OPD) permettant de respecter la fraction de temps de lecture total allouée à chaque contenu multipliée par le coefficient multiplicateur de durée totale ; divisée par
∘ le dénominateur de la fraction de temps de lecture total allouée au programme multiplié par la durée minimale du programme ($d_{si}$) permettant de respecter la fraction de temps de lecture total allouée à chaque contenu au sein du programme.

**7.** Procédé selon l'une quelconque des revendications 2 à 6, dépendant de l'une des revendications 2 ou 3, dans lequel a3) réduire le nombre d'occurrences d'au moins un contenu comprend diviser le nombre total d'occurrences de chaque contenu par un même diviseur, en approximant les nombres totaux d'occurrences de contenus qui ne sont pas divisibles par le diviseur.

**8.** Procédé selon l'une quelconque des revendications 2 à 7, dépendant de l'une des revendications 2 ou 3 dans lequel l'étape de réduire le nombre d'occurrences d'au moins un contenu n'est mise en œuvre que si un ensemble de conditions est respecté, ledit ensemble de conditions comprenant au moins une parmi des conditions suivantes :

- la somme des nombres d'occurrences minimales de chaque contenu permettant de respecter la fraction de temps de lecture total allouée à chaque contenu est supérieur à un seuil de nombre d'occurrences ;
- la durée minimale de la liste permettant de respecter la fraction de temps de lecture total allouée à chaque contenu est supérieure à un seuil de durée.

**9.** Procédé selon la revendication précédente, dépendant de la revendication 4, dans lequel a3) réduire le nombre d'occurrences d'au moins un contenu comprend :

- supprimer au moins un des programmes afin de respecter ledit ensemble de conditions ;
- calculer un nombre d'occurrences minimal de jeu de chaque contenu permettant de respecter la fraction de temps de lecture total allouée à chaque contenu sans tenir compte de l'au moins un des programmes supprimé ;
- déterminer un diviseur de la durée de la liste de lecture ainsi obtenu ;
- remplacer ledit au moins un des programmes supprimé par une approximation de la division des nombres totaux d'occurrences des contenus du programme par le diviseur.

**10.** Procédé selon l'une quelconque des revendications précédentes 2 à 9, dépendant de l'une des revendications 2 ou 3, dans lequel a3) réduire le nombre d'occurrences d'au moins un contenu comprend incrémenter ou décrémenter itérativement les nombres totaux des contenus du contenu du plus long au moins long afin de réduire un reste d'une division euclidienne des nombres totaux des contenus par un diviseur.

11. Procédé selon l'une quelconque des revendications précédentes, comportant en outre :

    b) générer par ledit au moins un serveur (7), pour chaque dispositif d'affichage digital (2), un manifeste de chargement comprenant au moins des adresses de chargement de contenus numériques ;
    c) mettre à jour des listes de lecture et des manifestes de chargement par les dispositifs d'affichage digital (2), comprenant :
    c1) interroger ledit au moins un serveur (7), à intervalles prédéterminés, par chaque dispositif d'affichage digital (2), pour déterminer si ledit au moins un serveur (7) a une nouvelle liste de lecture et / ou un nouveau manifeste de chargement correspondant audit dispositif d'affichage digital (2) ;
    c2) dans l'affirmative, charger ladite nouvelle liste de lecture et / ou ledit nouveau manifeste de chargement sur le dispositif d'affichage digital (2) ;
    c3) si un nouveau manifeste de chargement a été chargé depuis le serveur (7), déterminer par ledit dispositif d'affichage digital (2) quels sont le ou les nouveaux contenus numériques référencés dans ledit manifeste de chargement ;
    c4) et télécharger par ledit dispositif d'affichage digital (2), ledit ou lesdits nouveaux contenus numériques depuis la ou les adresses indiquées dans le nouveau manifeste de chargement ;
    d) lire par chaque dispositif d'affichage digital (2) les contenus numériques correspondant à une liste de lecture en vigueur pour ce dispositif d'affichage digital (2) et afficher ces contenus numériques sur un écran digital (4) appartenant audit dispositif d'affichage digital (2).

12. Serveur (7) d'affichage digital adapté pour commander des dispositifs d'affichage digital (2), ledit serveur étant adapté mettre en œuvre le procédé selon l'une des revendications 1 à 8.

13. Programme informatique comportant des instructions pour la mise en œuvre du procédé selon l'une des revendications 1 à 11 lorsque ce programme est exécuté par un processeur.

14. Support d'enregistrement non transitoire lisible par un ordinateur sur lequel est enregistré un programme pour la mise en œuvre du procédé selon l'une des revendications 1 à 11 lorsque ce programme est exécuté par un processeur.

[Fig. 1]

FIG. 1

[Fig. 2]

FIG. 2

[Fig. 3]

Fig. 3

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 3 110 312 A1 (JC DECAUX [FR]) 19 novembre 2021 (2021-11-19) * figures 1,2 * * revendication 1 * * alinéas [0003] - [0005] * ----- | 1-14 | INV. G06Q30/0251 G06Q30/0272 |

**DOMAINES TECHNIQUES RECHERCHES (IPC)**

G06Q

Le présent rapport a été établi pour toutes les revendications

| Lieu de la recherche | Date d'achèvement de la recherche | Examinateur |
|---|---|---|
| Munich | 11 février 2026 | Michalski, Stéphane |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 25 20 8573

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-02-2026

| Document brevet cité au rapport de recherche | | Date de publication | Membre(s) de la famille de brevet(s) | | Date de publication |
|---|---|---|---|---|---|
| FR 3110312 | A1 | 19-11-2021 | AT | 524629 A2 | 15-07-2022 |
| | | | AU | 2021290260 A1 | 28-07-2022 |
| | | | BE | 1029005 A1 | 08-08-2022 |
| | | | BR | 102022000165 A2 | 19-07-2022 |
| | | | CA | 3144803 A1 | 13-07-2022 |
| | | | CN | 114765697 A | 19-07-2022 |
| | | | DE | 102021134439 A1 | 14-07-2022 |
| | | | DK | 202170659 A1 | 02-08-2022 |
| | | | EE | 202200001 A | 15-08-2023 |
| | | | ES | 2919668 A2 | 27-07-2022 |
| | | | FI | 20225001 A1 | 14-07-2022 |
| | | | FR | 3110312 A1 | 19-11-2021 |
| | | | GB | 2604722 A | 14-09-2022 |
| | | | IE | 20220004 A2 | 12-10-2022 |
| | | | JP | 2022108735 A | 26-07-2022 |
| | | | LT | 6943 B | 10-10-2022 |
| | | | LV | 15662 B | 20-05-2023 |
| | | | NL | 2030359 A | 25-07-2022 |
| | | | NO | 20220039 A1 | 14-07-2022 |
| | | | PT | 117733 A | 13-07-2022 |
| | | | SE | 2250001 A1 | 14-07-2022 |
| | | | SI | 26142 A | 29-07-2022 |
| | | | SK | 289392 B6 | 14-01-2026 |
| | | | US | 2022224959 A1 | 14-07-2022 |
| | | | ZA | 202200316 B | 20-12-2023 |

EPO FORM P0460

Pour tout renseignement concernant cette annexe : voir Journal Officiel de l'Office européen des brevets, No.12/82